# EUROPÄISCHE PATENTSCHRIFT

(11) **EP 2 703 822 B1**
(45) Veröffentlichungstag und Bekanntmachung des Hinweises auf die Patenterteilung: **23.10.2019**
(21) Anmeldenummer: 13177057.0
(22) Anmeldetag: 18.07.2013
(51) Int. Cl.: G01P 1/12, G01P 21/02, G07C 5/08

(54) **Vorrichtung zur Ermittlung und/oder Einstellung der Genauigkeit eines Tachographen**
Device for determining and/or setting the accuracy of a tachograph
Dispositif de détermination et/ou de réglage de la précision d'un tachygraphe

(30) Priorität: 03.09.2012 DE 202012008589 U
(43) Veröffentlichungstag der Anmeldung: 05.03.2014
(73) Patentinhaber: Semmler GmbH Tacho Control, 73037 Göppingen (DE)
(72) Erfinder: Semmler, Ralf, 73037 Göppingen (DE)
(74) Vertreter: Patentanwälte Ruff, Wilhelm, Beier, Dauster & Partner mbB

(56) Entgegenhaltungen:
- EP-A2- 0 837 332
- WO-A1-2006/040560
- WO-A1-2008/141456
- DE-A1-102007 062 960
- DE-B3-102004 043 052

## Beschreibung

Die Erfindung betrifft eine Vorrichtung zur Ermittlung und/oder Einstellung einer Genauigkeit eines in einem Fahrzeug verbauten Kontrollgeräts, insbesondere eines digitalen Tachographen. Die Erfindung betrifft weiter ein Computerprogramm-Produkt zum Ablauf an einer Messeinrichtung als Teil einer derartigen Vorrichtung, und ein Verfahren zur Ermittlung und/oder Einstellung einer Genauigkeit eines in einem Fahrzeug verbauten Kontrollgeräts.

Als Tachograph, auch Fahrtenschreiber oder EG-Kontrollgerät, wird ein Tachometer mit angeschlossenem oder integriertem Messschreiber in einem Fahrzeug bezeichnet, der Lenk- und Ruhezeiten, Lenkzeitunterbrechungen, gefahrene Kilometer und/oder die gefahrene Geschwindigkeit aufzeichnet. Die technischen Spezifikationen eines EG-Kontrollgeräts sind derzeit im Anhang B der EG-Verordnung VO (EG) Nr. 1360/2002 vom 13. Juni 2002 zur siebten Anpassung der Verordnung (EWG) Nr. 3821/85 festgelegt.

Zur Auswertung der aufgezeichneten Signale ist beispielsweise aus dem Dokument DE 10 2007 062 960 A1 ein Kommunikationssteuergerät bekannt.

Das Fahrzeug weist mindestens ein im Fahrzeug angeordnetes System zur Erfassung der vom Fahrzeug zurückgelegten Wegstrecke auf.

Üblicherweise weist das Fahrzeug einen Impulsgeber auf, welcher in Abhängigkeit der Radumdrehung Wegimpulse liefert, wobei der digitale Tachograph aus einer bestimmten Anzahl an Wegimpulsen in Abhängigkeit von Gerätekonstanten eine Wegstrecke bestimmt.

Die Gerätekonstanten hängen beispielsweise von einer Fahrzeugbeschaffenheit ab und sind an diese bei einer Installation der Tachographen anzupassen. Um Fehlfunktionen und/oder Manipulationen des digitalen Tachographen auch nach einer Installation zu vermeiden, ist es notwendig, Daten aus dem Tachographen auszulesen und deren Genauigkeit zu prüfen, beispielsweise für eine Kalibrierung und/oder eine Kontrolle.

Zur Ermittlung und/oder Einstellung der Genauigkeit des Kontrollgeräts sind Straßenmessungen und/oder Messungen an einem Prüfstand, insbesondere einem Rollenprüfstand, bekannt. Für die Messung wird ein Mess- oder Diagnosegerät mittels eines Kabels mit dem im Fahrzeug verbauten Kontrollgerät und mit dem Prüfstand bzw. bei einer Straßenmessung mit einer Lichtschranke verbunden, wobei durch das Messgerät die Wegstrecke der Straßenmessung beziehungsweise die simulierte Wegstrecke am Prüfstand und die vom Kontrollgerät detektierte Wegstrecke erfasst und verglichen werden. Die Auswertung erfolgt entsprechend der aktuellen Gesetzeslage üblicherweise an dem Mess- oder Diagnosegerät. Eine Archivierung erfasster Daten, eine Zweitanzeige und/oder ein Ausdruck erfolgt dagegen üblicherweise nicht über das Mess- oder Diagnosegerät, sodass die aus dem Kontrollgerät ausgelesenen Daten und/oder die Messdaten des Prüfstands für eine Archivierung, eine Zweitanzeige, ein Ausdruck und/oder dergleichen manuell oder alternativ über eine Schnittstelle an eine Recheneinheit übertragen werden müssen. Ein Prüfaufbau ist dabei meist sehr komplex und ein Prüfvorgang mit einem hohen Aufwand verbunden, bei welchem es üblicherweise auch notwendig wird, in das zu prüfende Fahrzeug mehrmals ein- oder auszusteigen.

Aus dem Dokument DE 10 2004 043052 B3 ist ein Verfahren zur Manipulationserkennung bei einem Tachographen bekannt, wobei ein Wegimpulse erfassender Sensor mit dem Tachograph mittels einer Echtzeitverbindungsleitung und einer Datenleitung in Verbindung steht. Der Sensor sendet sowohl Echtzeitimpulse, welche in dem Tachograph aufsummiert werden, als auch ein Datensignal, welches die in einer Periode erfasste Zahl an Impulsen angibt. Die an dem Tachograph durch Aufsummieren der Echtzeitimpulse erhaltene Zahl und das Datensignal werden verglichen.

Aus dem Dokument EP 0 837 332 A2 ist eine Vorrichtung zur Ermittlung der Gerätekonstanten bei einem in einem Fahrzeug verbauten Kontrollgerät an einem Rollenprüfstand bekannt, wobei die Vorrichtung ein im Fahrzeug anordenbares mobiles Funkterminal umfasst, das über eine Datenverbindung zum Kontrollgerät die von dessen Impulsgeber erfassten Wegimpulse aufnimmt. Das Funkterminal steht mit einem am Rollenprüfstand vorgesehenen Messrechner in bidirektionaler Funkverbindung und überträgt die Wegimpulse in Echtzeit an den Messrechner. An dem Messrechner werden ein Wegstreckensignal und ein Radumfangssignal erfasst. Aus dem erfassten Wegstreckensignal und dem erfassten Radumfangssignal ermittelt der Messrechner ebenfalls eine Wegimpulszahl, die mit den zeitgleich vom Kontrollgerät gelieferten Wegimpulsen zu vergleichen ist. Wenn beide Zahlenwerte von einander abweichen, muss die Gerätekonstante des Kontrollgerätes solange verändert werden, bis zwischen beiden Wegimpulszahlen Gleichheit besteht.

Es ist eine Aufgabe der Erfindung, eine Vorrichtung zur Ermittlung und/oder Einstellung einer Genauigkeit eines in einem Fahrzeug verbauten Kontrollgeräts zu schaffen, mittels welcher eine Überprüfung schnell, kostengünstig und mit einer hohen Sicherheit gegen Datenmanipulationen durchführbar ist.

Weiter ist es eine Aufgabe, ein Computerprogramm-Produkt zum Ablauf auf einer Messeinrichtung als Teil einer Vorrichtung der genannten Art zu schaffen und ein Verfahren zur Ermittlung und/oder Einstellung einer Genauigkeit eines in einem Fahrzeug verbauten Kontrollgeräts zu schaffen.

Diese Aufgabe wird gelöst durch eine Vorrichtung zur Ermittlung und/oder Einstellung einer Genauigkeit bei einem in einem Fahrzeug verbauten Kontrollgerät, insbesondere bei einem digitalen Tachographen, wobei an das Kontrollgerät mindestens ein im Fahrzeug angeordnetes System zur Erfassung der vom Fahrzeug zurückgelegten Wegstrecke angeschlossen ist. Die Vorrichtung umfasst eine mit dem Kontrollgerät verbindbare, im Fahrzeug anordenbare mobile Erfassungseinheit und eine gerätetechnisch davon getrennte, außerhalb des Fahrzeugs anordenbare Messeinrichtung, wobei die Erfassungseinheit eine Empfangs- und Sendeeinheit zur drahtlosen, bidirektionalen Kommunikation mit der Messeinrichtung und eine Schnittstelle zu dem Kontrollgerät aufweist, und mittels der Schnittstelle von dem System erfasste Daten aus dem Kontrollgerät auslesbar sind. Dabei ist vorgesehen, dass die Messeinrichtung und die Erfassungseinheit so eingerichtet sind, um über ein Kommunikationsprotokoll Befehle und Daten auszutauschen. dass die Erfassungseinheit eingerichtet ist, um aus den während eines Prüfvorgangs erfassten Daten mindestens eine Kenngröße zu ermitteln und um die mindestens eine ermittelte Kenngröße an die Messeinrichtung zu übertragen, und dass die Messeinrichtung eine Schnittstelle zu einem Prüfstand zum Messen eines vom Fahrzeug zurückgelegten Weges aufweist und eingerichtet ist, um aus den mittels des Prüfstands erfassten Messdaten eine zu der mindestens einen Kenngröße korrespondierende Vergleichsgröße zu ermitteln.

Die Schnittstelle zwischen dem Kontrollgerät und der Erfassungseinheit ist geeignet für eine Datenübertragung realisiert. Beispielsweise weist das Kontrollgerät eine gemäß der oben genannten EG-Verordnung VO (EG) Nr. 1360/2002 gestaltete Anschlussbuchse auf, wobei die Erfassungseinheit eine zugehörige Steckverbindung aufweist. Die Erfassungseinheit ist in vorteilhaften Ausgestaltungen kleinbauend und mit einem geringen Gewicht realisierbar, sodass ein direkter Anschluss an die Anschlussbuchse möglich ist.

Eine Kommunikation zwischen der Messeinrichtung und der Erfassungseinheit erfolgt drahtlos, wobei eine vorteilhafte Funktechnik durch den Fachmann je nach Anwendungsfall, insbesondere auch in Abhängigkeit einer notwendigen Reichweite, geeignet wählbar ist.

Die Messeinrichtung und die Erfassungseinheit tauschen im Betrieb über ein Kommunikationsprotokoll Befehle und Daten aus. Die Befehle der Messeinrichtung an die Erfassungseinheit werden von der Erfassungseinheit ausgewertet und an der Erfassungseinheit werden entsprechende Aktionen in Reaktion auf die Befehle ausgelöst. Die Befehle und/oder Aktionen umfassen in einer Ausgestaltung einfache Datenabfragen. Insbesondere sendet die Messeinrichtung Befehle zum Starten und/oder Beenden eines Prüfvorgangs zum Auslesen der Daten.

Als Prüfvorgang wird ein zeitlich begrenzter Zeitraum bezeichnet, für welchen erfasste Daten ausgewertet werden. In einer Ausgestaltung werden die Daten kontinuierliche ausgelesen, wobei eine Auswertung der Daten nur während eines zeitlich begrenzten Prüfvorgangs erfolgt. In anderen Ausgestaltungen wird ein Auslesen der Daten in Reaktion auf einen Befehl gestartet und beendet.

In einer Ausgestaltung werden an die Erfassungseinheit ein Startsignal zum Starten des Prüfvorgangs und ein Stoppsignal zum Beenden des Prüfvorgangs übertragen. Derartige Signale sind einfach, beispielsweise als Triggerimpuls, realisierbar. In einer anderen Ausgestaltung werden ein Startsignal und eine gewünschte Messdauer in einem Befehl an die Erfassungseinheit übertragen.

An der Erfassungseinheit wird aus den während eines Prüfvorgangs erfassten Daten mindestens eine Kenngröße ermittelt und diese Kenngröße an die Messeinrichtung übertragen. Ein Übertragen der Daten, insbesondere von Wegimpulsen, in Echtzeit, wie es aus dem Stand der Technik, beispielsweise aus EP 0 837 332 A2, bekannt ist, kann so entfallen. Dadurch wird die Gefahr von Datenverlusten und/oder Datenmanipulationen während einer Übertragung zwischen der Erfassungseinheit und der Messeinrichtung verringert. In einer Ausgestaltung ist vorgesehen, dass die Messeinrichtung den Empfang der mindestens einen Kenngröße quittiert und die Erfassungseinheit eine Übertragung der Kenngröße bis zum Erhalt der Quittung wiederholt. Die Übertragung erfolgt in einer Ausgestaltung zumindest teilweise verschlüsselt, um Manipulationen zu verhindern.

An das Kontrollgerät ist mindestens ein im Fahrzeug angeordnetes System zur Erfassung der vom Fahrzeug zurückgelegten Wegstrecke angeschlossen. Bei dem System handelt es sich beispielsweise um ein Navigationssatellitensystem.

In einer vorteilhaften Ausgestaltung ist das mindestens eine System zur Erfassung der vom Fahrzeug zurückgelegten Wegstrecke als Impulsgeber zur Erfassung von Wegimpulsen gestaltet. In anderen Worten, das Kontrollgerät ist mindestens an einen Impulsgeber zur Erfassung von Wegimpulsen angeschlossen. Zusätzlich kann das Kontrollgerät an weitere Systeme angeschlossen sein.

In einer Ausgestaltung ist vorgesehen, dass die Erfassungseinheit eine Zähleinheit umfasst, um als mindestens eine erste Kenngröße eine Anzahl an Wegimpulsen zu ermitteln. Die Zähleinheit ist je nach technischer Anforderung an die Erfassungseinheit und/oder baulicher Rahmenbedingungen innerhalb eines Gehäuses der Erfassungseinheit Hardware- oder Software-technisch realisiert. Aus der Anzahl an Wegimpulsen während eines Prüfvorgangs und einer Zeitdauer des Prüfvorgangs sind in einer Ausgestaltung Gerätekonstanten des Kontrollgeräts ermittelbar. In vorteilhaften Ausgestaltungen sind dabei zusätzliche Randbedingungen wie eine Soll-Geschwindigkeit des Fahrzeugs, eine Getriebestufe, oder dergleichen berücksichtigbar. In einer Ausgestaltung erfolgt eine Auswertung anhand einer für den Prüfvorgang vorgesehenen, durch die Messeinrichtung und/oder die Erfassungseinheit vorgegebenen Soll-Zeitdauer.

In einer vorteilhaften Ausgestaltung ist die Erfassungseinheit eingerichtet, um als mindestens eine zweite Kenngröße ein Synchronisationssignal, insbesondere eine Zeitdauer eines Prüfvorgangs, zu ermitteln. Durch den Einsatz geeigneter Synchronisationsverfahren zwischen der Messeinheit und der Erfassungseinheit werden etwaige Verzögerungen bei einer Übertragung einer Steueranweisung zum Starten und/oder Beenden eines Prüfvorgangs ausgeglichen. In einer Ausgestaltung erfolgt zu diesem Zweck die Ermittlung einer tatsächlichen Zeitdauer eines Prüfvorgangs.

Der Messeinrichtung ist weiter beispielsweise für eine Straßenmessung mit einer Lichtschranke oder dergleichen verbunden, so dass eine tatsächlich durch das Fahrzeug zurückgelegte Wegstrecke erfassbar ist.

In einer weiteren Ausgestaltung ist vorgesehen, dass der Prüfstand zum Messen eines vom Fahrzeug zurückgelegten Weges ein Rollenprüfstand ist. Die Gestaltung eines Rollenprüfstands, sodass dieser zur Eichung oder Kalibrierung eines Tachographen verwendbar ist, ist beispielsweise aus DE 29 52 730 A1 bekannt. Dabei ist in einer vorteilhaften Ausgestaltung insbesondere vorgesehen, dass Impulszahlen einer Messrolle erfasst und anhand der Impulszahlen ein Wegstreckensignal ermittelt wird. Die Messeinrichtung ist in einer Ausgestaltung ausgebildet, um anhand des mittels des Prüfstands ermittelten Wegstreckensignals eine Soll-Anzahl der durch die Erfassungseinheit erfassten Wegimpulse für die Zeitdauer des Prüfvorgangs als Vergleichsgröße zu bestimmen. Bei Abweichungen zwischen der ermittelten Anzahl und der Soll-Anzahl kann die Genauigkeit des Kontrollgeräts, beispielsweise durch Veränderung von Gerätekonstanten, entsprechend korrigiert werden.

In einer Ausgestaltung umfasst die Messeinrichtung ein Messgerät und einen davon gerätetechnisch getrennten Messrechner. Auswertungen erfolgen in einer Ausgestaltung an dem Messgerät, um Manipulationen zu verhindern. Als Messrechner ist ein handelsüblicher PC, Laptop oder ein handelsübliches Mobilgerät verwendbar. Der Messrechner verfügt über eine Mensch-Maschine-Schnittstelle zur Eingabe von Daten durch einen Nutzer. Vorzugsweise sind Ergebnisse an dem Messrechner visualisierbar. Über eine geeignete Schnittstelle des Messrechners wird eine Kommunikation zu dem Messgerät aufgebaut. Die Schnittstelle ist in einer Ausgestaltung durch ein Kabel oder dergleichen realisiert. In anderen Ausgestaltungen erfolgt eine drahtlose Kommunikation. Das Messgerät verfügt über eine Schnittstelle zu dem Prüfstand. Vorzugsweise findet auch die Kommunikation mit der Erfassungseinheit via das Messgerät statt. Die Messeinrichtung ist als sogenannte Stand-alone Lösung in einer Werkstatt oder einer Prüfhalle vorsehbar.

In einer vorteilhaften Weiterbildung ist alternativ oder zusätzlich zu der Ausgestaltung der Messeinrichtung mit Messgerät und Messrechner vorgesehen, dass die Messeinrichtung eine Schnittstelle zu einem Zentralrechner aufweist, wobei Daten und/oder Anweisungen zur Durchführung eines Prüfvorgangs von dem Zentralrechner an die Messeinrichtung übertragen werden und/oder ein Programm zur Durchführung eines Prüfvorgangs zumindest teilweise an dem Zentralrechner durchführbar ist. Als Zentralrechner wird ein Rechner bezeichnet, welcher örtlich von der Messeinrichtung getrennt angeordnet sein kann und an welchen eine oder mehrere Messeinrichtungen für eine Datenkommunikation anschließbar sind. In einer Ausgestaltung ist vorgesehen, dass der Zentralrechner mit einem Messgerät zum Austausch von Daten und Befehlen kommuniziert, wobei auf einen zusätzlichen Messrechner an der Messeinrichtung verzichtet wird. In anderen Ausgestaltungen kommuniziert der Zentralrechner alternativ oder zusätzlich mit einem Messrechner der Messeinrichtung.

Der Zentralrechner stellt den Messeinrichtungen die auf dem Zentralrechner gespeicherten Daten, Anweisungen und/oder Programme, wie Anwendungsprogramme, Hilfsprogramme und Systemprogramme, zur Verfügung. Durch den Zentralrechner ist es möglich, Daten, Anweisungen und/oder Programme zur Durchführung eines Prüfvorgangs zentral zu verwalten. Durch die Schnittstelle zu dem Zentralrechner stehen die zentral verwalteten Daten, Anweisungen und/oder Programmen an einer Messeinrichtung zur Verfügung, ohne dass hierfür eine Installation vor Ort, beispielsweise in einer Werkstatt oder einer Prüfhalle, erforderlich ist. Der Zentralrechner ist beispielsweise ein unternehmensinterner Rechner, welcher über ein Intranet oder dergleichen mit mehreren Messeinrichtungen kommuniziert. Eine Kommunikation ist dabei drahtlos oder per Kabel möglich, wobei die Schnittstellen entsprechend ausgebildet sind.

In einer anderen Ausgestaltung ist der Zentralrechner einem Unternehmen und/oder einer Kontrollbehörde zugeordnet, und wird durch dieses/diese überwacht und gepflegt, wobei Mitarbeiter des Unternehmens/der Kontrollbehörde auch von extern auf den Zentralrechner zugreifen können. Ein Zugriff ist dabei vorzugsweise passwort-geschützt. Insbesondere ist es denkbar, dass für eine Kontrollbehörde tätige Sachverständige von Prüfstellen, welche sich außerhalb der Kontrollbehörde befinden, auf einen Zentralrechner der Kontrollbehörde zugreifen, um eine Überprüfung eines Kontrollgeräts durchzuführen. Die bei der Überprüfung erfassten Daten sind dabei an dem Zentralrechner und/oder einer mit dem Zentralrechner verbundenen Datenbank zentral verwaltbar.

Insbesondere ist in einer Ausgestaltung das Programm zur Durchführung eines Prüfvorgangs als Webanwendung an der Messeinrichtung verfügbar. Dadurch ist es möglich, dass Programm über ein netzwerkbasiertes Programm, beispielsweise einen Webbrowser, lokal aufzurufen, wobei Daten von dem Zentralrechner an die Messeinrichtung über das Netzwerk, insbesondere über ein Intranet oder das Internet, übertragen werden. Dies ermöglicht es auch, auf eine spezielle Software zur Durchführung des Programms an der Messeinrichtung zu verzichten und stattdessen Standard-Programme zu verwenden. Für eine Übertragung über das Internet sind in einer Ausgestaltung Verschlüsselungsverfahren vorgesehen, um eine Manipulation von außen zu verhindern.

In einer weiteren Ausgestaltung ist ein Wartungsrechner vorgesehen, wobei die Messeinrichtung mit dem Wartungsrechner für eine Datenübertragung verbindbar ist. Der Wartungsrechner ist in einer Ausgestaltung einem Hersteller der Erfassungseinheit und/oder der Messeinrichtung zugeordnet, wobei Daten betreffend die Benutzung an dem Wartungsrechner verwaltbar sind. Die Kommunikation erfolgt in einer Ausgestaltung mittels der Webanwendung. In einer Ausgestaltung wird mittels des Wartungsrechners auch eine Häufigkeit einer Benutzung die Erfassungseinheit und/oder die Messeinrichtung ermittelt. Dabei ist in einer Ausgestaltung vorgesehen, dass die Erfassungseinheit und/oder die Messeinrichtung zumindest teilweise an einer Prüfstelle durch einen Hersteller bereit gestellt werden, wobei Kosten für eine Bereitstellung der Geräte in Abhängigkeit einer Häufigkeit der Benutzung ermittelt werden.

Die Aufgabe wird auch gelöst durch ein Computerprogramm-Produkt zum Ablauf, vorzugsweise mit einem netzwerkbasierten Programm, an einer Messeinrichtung als Teil einer Vorrichtung zur Ermittlung und/oder Einstellung einer Genauigkeit bei einem in einem Fahrzeug verbauten Kontrollgerät, insbesondere bei einem digitalen Tachographen, wobei an das Kontrollgerät ein im Fahrzeug angeordnetes System zur Erfassung der vom Fahrzeug zurückgelegten Wegstrecke angeschlossen ist, wobei eine mit dem Kontrollgerät verbindbares, im Fahrzeug anordenbare mobile Erfassungseinheit vorgesehen ist, die eine Empfangs- und Sendeeinheit zur drahtlosen, bidirektionalen Kommunikation mit der Messeinrichtung und eine Schnittstelle zu dem Kontrollgerät, mittels der von dem System erfasste Daten aus dem Kontrollgerät auslesbar sind, aufweist, und wobei das Computerprogramm-Produkt die Messeinrichtung veranlasst, über ein Kommunikationsprotokoll Befehle und/oder Daten an die Erfassungseinheit zum Starten und/oder Beenden eines Prüfvorgangs zu senden und eine ermittelte Kenngröße von der Erfassungseinheit zu empfangen, Messdaten von einem Prüfstand zum Messen eines vom Fahrzeug zurückgelegten Weges zu erfassen und aus den mittels des Prüfstands erfassten Messdaten eine zu der mindestens einen Kenngröße korrespondierende Vergleichsgröße zu ermitteln.

Das Computerprogramm-Produkt ist weiter vorzugsweise gestaltet, um mindestens eine Vergleichsgröße für die mindestens eine Kenngröße unter Verwendung von Daten eines Prüfstands zu ermitteln. Die Vergleichsgröße wird dabei in einer Ausgestaltung durch den Prüfstand ermittelt und an die Messeinrichtung übertragen. In einer anderen Ausgestaltung, werden mittels der Messeinrichtung Daten des Prüfstands, wie beispielsweise ein Wegstreckensignal und/oder ein Radumfangssignal erfasst und an der Messeinrichtung ausgewertet, um aus den erfassten Daten eine Vergleichsgröße zu ermitteln.

Schließlich wird die Aufgabe gelöst durch Verfahren zur Ermittlung und/oder Einstellung einer Genauigkeit eines in einem Fahrzeug verbauten Kontrollgeräts, insbesondere eines digitalen Tachographen, wobei an das Kontrollgerät mindestens ein im Fahrzeug angeordnetes System zur Erfassung der vom Fahrzeug zurückgelegten Wegstrecke angeschlossen ist, mittels einer mit dem Kontrollgerät verbindbaren, im Fahrzeug anordenbaren mobile Erfassungseinheit und einer außerhalb des Fahrzeugs anordenbaren Messeinrichtung, wobei die Erfassungseinheit eine Empfangs- und Sendeeinheit zur drahtlosen, bidirektionalen Kommunikation mit der Messeinrichtung und eine Schnittstelle zu dem Kontrollgerät aufweist, wobei mittels der Schnittstelle von dem System erfasste Daten aus dem Kontrollgerät ausgelesen werden, wobei die Messeinrichtung und die Erfassungseinheit über ein Kommunikationsprotokoll Befehle und Daten austauschen, wobei die Erfassungseinheit aus den während eines Prüfvorgangs erfassten Daten mindestens eine Kenngröße ermittelt und wobei die mindestens eine ermittelte Kenngröße an die Messeinrichtung übertragen wird, und wobei die Messeinrichtung Messdaten von einem Prüfstand zum Messen eines vom Fahrzeug zurückgelegten Weges erfasst und aus den mittels des Prüfstands erfassten Messdaten eine zu der mindestens einen Kenngröße korrespondierende Vergleichsgröße ermittelt.

Weitere Vorteile der Erfindung ergeben sich aus den Unteransprüchen und aus der nachfolgenden Beschreibung eines Ausführungsbeispiels der Erfindung, das in der einzigen Figur schematisch dargestellt ist.

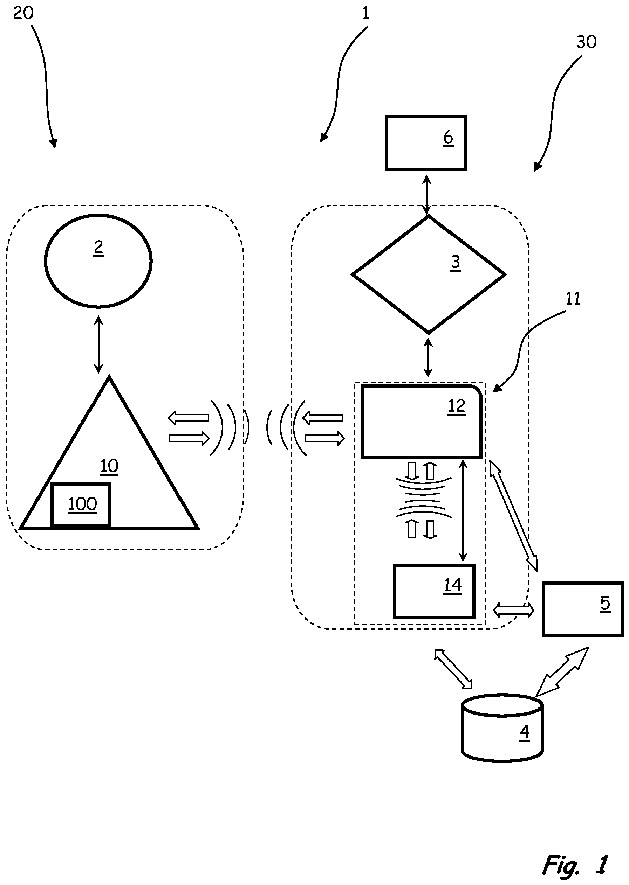

Die Figur 1 zeigt
schematisch ein Ausführungsbeispiel einer erfindungsgemäßen Vorrichtung.

Die Figur 1 zeigt ein Ausführungsbeispiel einer erfindungsgemäßen Vorrichtung 1 zur Ermittlung und/oder Einstellung einer Genauigkeit bei einem in einem Fahrzeug verbauten Kontrollgerät 2 an einem Prüfstand 3. Ein Bereich des Fahrzeugs ist dabei durch eine gestrichelte Linie 20, ein Bereich einer Prüfhalle oder Werkstatt außerhalb des Fahrzeugs mit dem Prüfstand 3 durch eine gestrichelte Linie 30 dargestellt.

An das Kontrollgerät 2 ist ein in dem Fahrzeug angeordnetes, nicht dargestelltes System zur Erfassung der vom Fahrzeug zurückgelegten Wegstrecke angeschlossen. Bei dem System handelt es sich in einer Ausgestaltung um einen Impulsgeber. In anderen Ausgestaltungen werden Positionssignale eines Navigationssystems zur Erfassung der Wegstrecke verwendet.

Die Vorrichtung 1 umfasst eine mit dem Kontrollgerät 2 verbindbare, im Fahrzeug anordenbare mobile Erfassungseinheit 10 und eine davon gerätetechnisch getrennte, außerhalb des Fahrzeugs anordenbare Messeinrichtung 11 mit einem Messgerät 12 und einem Messrechner 14.

Die Erfassungseinheit 10 weist eine schematisch durch einen Doppelpfeil dargestellte Schnittstelle zu dem Kontrollgerät 2 auf, wobei mittels der Schnittstelle durch die Erfassungseinheit 10 erfasste Daten, beispielsweise von dem Impulsgeber erfasste Wegimpulse, aus dem Kontrollgerät 2 auslesbar sind. Die Schnittstelle umfasst in vorteilhaften Ausgestaltungen eine Steckverbindung für eine Verbindung der Erfassungseinheit 10 mit dem Kontrollgerät 2. In vorteilhaften Ausgestaltungen ist die Schnittstelle als Steckverbindung entsprechend EG-Verordnung VO (EG) Nr. 1360/2002 gestaltet.

Die Erfassungseinheit 10 und das Messgerät 12 weisen jeweils eine Empfangs- und Sendeeinheit für eine drahtlose bidirektionale Kommunikation auf, welche schematisch durch Pfeile dargestellt ist.

Zur Prüfung der Genauigkeit sendet die Erfassungseinheit 10 Daten an das Messgerät 12, wobei eine Auswertung der Daten durch das Messgerät 12 erfolgt. Dabei ist die Erfassungseinheit eingerichtet, eine Vorverarbeitung der Daten durchzuführen, wobei aus den während eines Prüfvorgangs ausgelesenen Daten mindestens eine Kenngröße ermittelt wird. Die Erfassungseinheit 10 sendet anschließend die mindestens eine ermittelte Kenngröße an das Messgerät 12.

Das Messgerät 12 umfasst eine Schnittstelle zu dem Prüfstand 3. Die Schnittstelle ist in dem dargestellten Ausführungsbeispiel mittels Kabel realisiert.

Die Messeinrichtung 11 umfasst weiter den Messrechner 14, welcher mit dem Messgerät 12 für eine bidirektionale Kommunikation verbunden ist. In dem dargestellten Ausführungsbeispiel sind das Messgerät 12 und der Messrechner 14 für eine drahtlose Kommunikation eingerichtet. Alternativ oder zusätzlich sind das Messgerät 12 und der Messrechner 14 mittels Kabel verbunden. In anderen Ausgestaltungen sind - sofern gesetzliche Bestimmungen dies zulassen - Messrechner und Messgerät als gemeinsame Baueinheit realisiert.

Der Messrechner 14 ist in dem dargestellten Ausführungsbeispiel mit einem Zentralrechner 4 und einem Wartungsrechner 5 über das Internet verbunden. Die Verbindung ist schematisch durch Doppel-Blockpfeile dargestellt. Für eine Überprüfung des Kontrollgeräts 2 ist an dem Zentralrechner 4 und/oder dem Wartungsrechner 5 ist eine Webanwendung gespeichert, welche an dem Messrechner 14 bei einer Ausführung dargestellt wird.

In dem dargestellten Ausführungsbeispiel ist zur Bedienung des Prüfstands 3 weiter ein lokaler Rechner 6 mit dem Prüfstand 3 verbunden. In anderen Ausgestaltungen erfolgt alternativ oder zusätzlich eine Bedienung des Prüfstands 3 über den Messrechner 14, wobei die Funktionalität des lokalen Rechners 6 in den Messrechner 14 integriert ist.

Die Überprüfung des Kontrollgeräts 2 durch Ermittlung und/oder Einstellung einer Genauigkeit erfolgt beispielsweise wie folgt:
Zur Durchführung einer Überprüfung sendet die Messeinrichtung 11 zunächst eine Steueranweisung zum Starten eines Prüfvorgangs an die Erfassungseinheit 10. Die Erfassungseinheit 10 liest darauf die von dem System erfassten Daten, beispielsweise von einem Impulsgeber erfasste Wegimpulse, aus dem Kontrollgerät 2 aus. An der Erfassungseinheit werden die erfassten Daten vorverarbeitet. Eine Vorverarbeitung erfolgt in einer Ausgestaltung mittels einer Recheneinheit 100. Dabei wird für eine Vorverarbeitung in einer vorteilhaften Ausgestaltung eine Anzahl erfasster Wegimpulse ab Beginn des Prüfvorgangs gezählt. Zum Beenden des Prüfvorgangs sendet die Messeinrichtung 11 eine entsprechende Steueranweisung an die Erfassungseinheit 10.

Nach Beenden des Prüfvorgangs überträgt die Erfassungseinheit 10 die vorverarbeiteten Daten als Kenngröße oder Kenngrößen an die Messeinrichtung 11. Beispielsweise sendet die Erfassungseinheit 10 die erfasste Anzahl an Wegimpulsen als erste Kenngröße sowie eine Zeitdauer des Prüfvorgangs als zweite Kenngröße an die Messeinrichtung.

Die Messeinrichtung 11 erfasst weiter eine Soll-Anzahl der Wegimpulse. In dem Ausführungsbeispiel wird die Soll-Anzahl aufgrund der Daten des Prüfstands 3 ermittelt. Der Prüfstand 3 ist beispielsweise ein Rollenprüfstand, wobei an dem Rollenprüfstand ein Wegstreckensignal durch Erfassung der Rollendrehzahl und ein Radumfangssignal durch Erfassung einer Umdrehungszahl eines von dem Rollenprüfstand angetriebenen Fahrzeugrades erfasst wird. Anhand dieser Daten ist eine Soll-Anzahl der durch das Kontrollgerät 2 erfassten Wegimpulse während eines Prüfvorgangs als Vergleichsgröße ermittelbar. Diese Vergleichsgröße ist mit der ersten Kenngröße vergleichbar, um so eine Genauigkeit zu prüfen und beispielsweise eine Gerätekonstante zu ermitteln und/oder ggf. einzustellen.

Eine Kommunikation zwischen der Erfassungseinheit 10 und dem Messgerät 12 ist vorzugsweise verschlüsselt. An dem Messgerät 12 sind Zugriffsberechtigungen für einen Lesezugriff und/oder einen Schreib-/Lesezugriff abgelegt, wobei je nach Berechtigung des Nutzers mittels des Messgeräts 12 und der Erfassungseinheit 10 ein entsprechender Zugriff freigegeben werden kann.

## Patentansprüche

1. Vorrichtung zur Ermittlung und/oder Einstellung einer Genauigkeit eines in einem Fahrzeug verbauten Kontrollgeräts (2), insbesondere eines digitalen Tachographen, wobei an das Kontrollgerät (2) mindestens ein im Fahrzeug angeordnetes System zur Erfassung der vom Fahrzeug zurückgelegten Wegstrecke angeschlossen ist, umfassend eine mit dem Kontrollgerät (2) verbindbare, im Fahrzeug anordenbare mobile Erfassungseinheit (10) und eine außerhalb des Fahrzeugs anordenbare Messeinrichtung (11), wobei die Erfassungseinheit (10) eine Empfangs- und Sendeeinheit zur drahtlosen, bidirektionalen Kommunikation mit der Messeinrichtung (11) und eine Schnittstelle zu dem Kontrollgerät (2) aufweist, und wobei mittels der Schnittstelle von dem System erfasste Daten aus dem Kontrollgerät (2) auslesbar sind,
**wobei**
die Messeinrichtung (11) und die Erfassungseinheit (10) eingerichtet sind, um über ein Kommunikationsprotokoll Befehle und Daten auszutauschen,
die Erfassungseinheit (10) eingerichtet ist, um aus den während eines Prüfvorgangs erfassten Daten mindestens eine Kenngröße zu ermitteln und um die mindestens eine ermittelte Kenngröße an die Messeinrichtung (11) zu übertragen, und
die Messeinrichtung (11) eine Schnittstelle zu einem Prüfstand (3) zum Messen eines vom Fahrzeug zurückgelegten Weges aufweist und eingerichtet ist, um aus den mittels des Prüfstands (3) erfassten Messdaten eine zu der mindestens einen Kenngröße korrespondierende Vergleichsgröße zu ermitteln.

2. Vorrichtung zur Ermittlung und/oder Einstellung einer Genauigkeit eines Kontrollgeräts (2) nach Anspruch 1, **dadurch gekennzeichnet, dass** das mindestens eine System als Impulsgeber zur Erfassung von Wegimpulsen gestaltet ist.

3. Vorrichtung zur Ermittlung und/oder Einstellung einer Genauigkeit eines Kontrollgeräts (2) nach Anspruch 2, **dadurch gekennzeichnet, dass** die Erfassungseinheit (10) eine Zähleinheit umfasst, um als mindestens eine erste Kenngröße eine Anzahl an Wegimpulsen während eines Prüfvorgangs zu ermitteln.

4. Vorrichtung zur Ermittlung und/oder Einstellung einer Genauigkeit eines Kontrollgeräts (2) nach einem der Ansprüche 1 bis 3, **dadurch gekennzeichnet, dass** die Erfassungseinheit (10) eingerichtet ist, um als mindestens eine zweite Kenngröße ein Synchronisationssignal, insbesondere eine Zeitdauer eines Prüfvorgangs, zu ermitteln.

5. Vorrichtung zur Ermittlung und/oder Einstellung einer Genauigkeit eines Kontrollgeräts (2) nach einem der Ansprüche 1 bis 4, **dadurch gekennzeichnet, dass** der Prüfstand (3) zum Messen eines vom Fahrzeug zurückgelegten Weges ein Rollenprüfstand ist.

6. Vorrichtung zur Ermittlung und/oder Einstellung einer Genauigkeit eines Kontrollgeräts (2) nach einem der Ansprüche 1 bis 5, **dadurch gekennzeichnet, dass** die Messeinrichtung (11) ein Messgerät (12) und einen davon gerätetechnisch getrennten Messrechner (14) umfasst.

7. Vorrichtung zur Ermittlung und/oder Einstellung einer Genauigkeit eines Kontrollgeräts (2) nach einem der Ansprüche 1 bis 6, **dadurch gekennzeichnet, dass** die Messeinrichtung (11) eine Schnittstelle zu einem Zentralrechner (4) aufweist, wobei Daten und/oder Anweisungen zur Durchführung eines Prüfvorgangs von dem Zentralrechner (4) an die Messeinrichtung übertragen werden und/oder ein Programm zur Durchführung eines Prüfvorgangs zumindest teilweise an dem Zentralrechner (4) durchführbar ist.

8. Vorrichtung zur Ermittlung und/oder Einstellung einer Genauigkeit eines Kontrollgeräts (2) nach Anspruch 7, **dadurch gekennzeichnet, dass** das Programm zur Durchführung eines Prüfvorgangs als Webanwendung an der Messeinrichtung (11) verfügbar ist.

9. Vorrichtung zur Ermittlung und/oder Einstellung einer Genauigkeit eines Kontrollgeräts (2) nach einem der Ansprüche 1 bis 8, **dadurch gekennzeichnet, dass** die Messeinrichtung (11) mit einem Wartungsrechner für eine Datenübertragung verbindbar ist.

10. Computerprogramm-Produkt zum Ablauf an einer Messeinrichtung (11) als Teil einer Vorrichtung nach einem der Ansprüche 1 bis 9 zur Ermittlung und/oder Einstellung einer Genauigkeit bei einem in einem Fahrzeug verbauten Kontrollgerät (2), insbesondere bei einem digitalen Tachographen, wobei an das Kontrollgerät (2) ein im Fahrzeug angeordnetes System zur Erfassung der vom Fahrzeug zurückgelegten Wegstrecke angeschlossen ist, und wobei eine mit dem Kontrollgerät (2) verbindbare, im Fahrzeug anordenbare mobile Erfassungseinheit (10) vorgesehen ist, die eine Empfangs- und Sendeeinheit zur Kommunikation mit der Messeinrichtung (11) und eine Schnittstelle zu dem Kontrollgerät (2), mittels der von dem System erfasste Daten aus dem Kontrollgerät (2) auslesbar sind, aufweist,
**wobei**
das Computerprogramm-Produkt Befehle umfasst, die bei der Ausführung des Computerprogramm-Produkts auf der Messeinrichtung (11) diese veranlassen, über ein Kommunikationsprotokoll Befehle und/oder Daten an die Erfassungseinheit (10) zum Starten und/oder Beenden eines Prüfvorgangs zu senden und eine ermittelte Kenngröße von der Erfassungseinheit (10) zu empfangen, Messdaten von einem Prüfstand (3) zum Messen eines vom Fahrzeug zurückgelegten Weges zu erfassen und aus den mittels des Prüfstands (3) erfassten Messdaten eine zu der mindestens einen Kenngröße korrespondierende Vergleichsgröße zu ermitteln.

11. Computerprogramm-Produkt nach Anspruch 10, zum Ablauf mit einem netzwerkbasierten Programm an der Messeinrichtung (11).

12. Verfahren zur Ermittlung und/oder Einstellung einer Genauigkeit eines in einem Fahrzeug verbauten Kontrollgeräts (2), insbesondere eines digitalen Tachographen, wobei an das Kontrollgerät (2) mindestens ein im Fahrzeug angeordnetes System zur Erfassung der vom Fahrzeug zurückgelegten Wegstrecke angeschlossen ist, mittels einer mit dem Kontrollgerät (2) verbindbaren, im Fahrzeug anordenbaren mobile Erfassungseinheit (10) und einer außerhalb des Fahrzeugs anordenbaren Messeinrichtung (11), wobei die Erfassungseinheit (10) eine Empfangs- und Sendeeinheit zur drahtlosen, bidirektionalen Kommunikation mit der Messeinrichtung (11) und eine Schnittstelle zu dem Kontrollgerät (2) aufweist, und wobei mittels der Schnittstelle von dem System erfasste Daten aus dem Kontrollgerät (2) ausgelesen werden,
**wobei**
die Messeinrichtung (11) und die Erfassungseinheit (10) über ein Kommunikationsprotokoll Befehle und Daten austauschen, wobei die Erfassungseinheit (10) aus den während eines Prüfvorgangs erfassten Daten mindestens eine Kenngröße ermittelt und die mindestens eine ermittelte Kenngröße an die Messeinrichtung (11) übertragen wird, und die Messeinrichtung (11) Messdaten von einem Prüfstand (3) zum Messen eines vom Fahrzeug zurückgelegten Weges erfasst und aus den mittels des Prüfstands (3) erfassten Messdaten eine zu der mindestens einen Kenngröße korrespondierende Vergleichsgröße ermittelt.

## Claims

1. Device for determining and/or setting an accuracy of a monitoring device (2) installed in a vehicle, in particular a digital tachograph, wherein at least one system for detecting the distance travelled by the vehicle is disposed in the vehicle and connected to the monitoring device (2), comprising a mobile detection unit (10) disposable in the vehicle and a measuring device (11) disposable outside the vehicle connectable to the monitoring device (2), wherein the detection unit (10) has a receiving and sending unit for wireless, bidirectional communication with the measuring device (11) and an interface to the monitoring device (2), and wherein, by means of the interface, data detected by the system can be read from the monitoring device (2),
wherein the measuring device (11) and the detection unit (10) are configured to exchange commands and data via a communications protocol,
the detection unit (10) is configured to determine at least one parameter from the data detected during a test procedure and to transmit the at least one parameter determined to the measuring device (11), and
the measuring device (11) has an interface to a test stand (3) for measuring a distance travelled by the vehicle and is configured to determine a comparative value corresponding to the at least one parameter from the measured data detected using the test stand (3).

2. Device for determining and/or setting an accuracy of a monitoring device (2) according to claim 1, **characterized in that** the at least one system is configured as a pulse generator for detecting distance pulses.

3. Device for determining and/or setting an accuracy of a monitoring device (2) according to claim 2, **characterized in that** the detection unit (10) comprises a counting unit to determine a number of distance pulses during a test procedure as at least one first parameter.

4. Device for determining and/or setting an accuracy of a monitoring device (2) according to any of claims 1 to 3, **characterized in that** the detection unit (10) is arranged to determine a synchronization signal, in particular a time period of a test procedure, as at least one second parameter.

5. Device for determining and/or setting an accuracy of a monitoring device (2) according to any of claims 1 to 4, **characterized in that** the test stand (3) for measuring a distance travelled by the vehicle is a chassis dynamometer.

6. Device for determining and/or setting an accuracy of a monitoring device (2) according to any of claims 1 to 5, **characterized in that** the measuring device (11) comprises a measuring instrument (12) and a measuring computer (14) implemented separate therefrom.

7. Device for determining and/or setting an accuracy of a monitoring device (2) according to any of claims 1 to 6, **characterized in that** the measuring device (11) has an interface to a central computer (4), wherein data and/or instructions for execution of a test procedure by the central computer (4) are transmitted to the measuring device and/or a program for execution of a test procedure is at least partially workable on the central computer (4).

8. Device for determining and/or setting an accuracy of a monitoring device (2) according to claim 7, **characterized in that** the program for execution of a test procedure is available on the measuring device (11) as a web application.

9. Device for determining and/or setting an accuracy of a monitoring device (2) according to any of claims 1 to 8, **characterized in that** the measuring device (11) is connectable to a maintenance computer for data transmission.

10. Computer program product for running on a measuring device (11) as part of a device according to any of claims 1 to 9 for determining and/or setting an accuracy of a monitoring device (2) installed in a vehicle, in particular a digital tachograph, wherein connected to the monitoring device (2) is a system disposed in the vehicle for detecting the distance travelled by the vehicle, and wherein a mobile detection unit (10) disposable in the vehicle and connectable to the monitoring device (2) is provided, which detection unit (10) has a receiving and sending unit for communication with the measuring device (11) and an interface to the monitoring device (2), by means of the interface, data detected by the system can be read from the monitoring device (2),
wherein the computer program product comprises commands which, upon execution of the computer program product on the measuring device (11), cause the latter to send commands and/or data via a communications protocol to the detection unit (10) for starting and/or stopping a test procedure and to receive a determined parameter from the detection unit (10), to detect measured data from a test stand (3) for measuring a distance travelled by the vehicle, and to determine a comparative value corresponding to the at least one parameter from the measured data detected using the test stand (3).

11. Computer program product according to claim 10, for running on a measuring device (11) with a network-based program.

12. Method for determining and/or setting an accuracy of a monitoring device (2) installed in a vehicle, in particular a digital tachograph, wherein at least one system for detecting the distance travelled by the vehicle is disposed in the vehicle and connected to the monitoring device (2) by means of a mobile detection unit (10) disposable in the vehicle and a measuring device (11) disposable outside the vehicle connectable to the monitoring device (2), wherein the detection unit (10) has a receiving and sending unit for wireless, bidirectional communication with the measuring device (11) and an interface to the monitoring device (2), and wherein, by means of the interface, data detected by the system are read from the monitoring device (2),
wherein the measuring device (11) and the detection unit (10) exchange commands and data via a communications protocol, wherein the detection unit (10) determines at least one parameter from the data detected during a test procedure and the at least one determined parameter is transmitted to the measuring device (11), and the measuring device (11) detects measured data from a test stand (3) for measuring a distance travelled by the vehicle and determines a comparative value corresponding to the at least one parameter from the measured data detected using the test stand (3).

## Revendications

1. Dispositif de détermination et/ou de réglage d'une précision d'un appareil de contrôle (2) installé dans un véhicule, en particulier d'un tachygraphe numérique, dans lequel au moins un système disposé dans le véhicule pour la détection du trajet parcouru par le véhicule est connecté à l'appareil de contrôle (2), comprenant une unité de détection mobile (10) qui peut être reliée à l'appareil de contrôle (2) et peut être disposée dans le véhicule et un dispositif de mesure (11) qui peut être disposé en-dehors du véhicule, dans lequel l'unité de détection (10) comporte une unité de réception et d'émission pour la communication bidirectionnelle sans fil avec le dispositif de mesure (11) et une interface avec l'appareil de contrôle (2), et dans lequel des données détectées par le système au moyen de l'interface peuvent être lues à partir de l'appareil de contrôle (2),
dans lequel le dispositif de mesure (11) et l'unité de détection (10) sont conçus pour échanger des instructions et des données par l'intermédiaire d'un protocole de communication,
l'unité de détection (10) est conçue pour déterminer au moins une grandeur caractéristique à partir des données détectées pendant un processus de test et pour transmettre ladite au moins une grandeur caractéristique déterminée au dispositif de mesure (11), et
le dispositif de mesure (11) comporte une interface avec un banc d'essai (3) pour la mesure d'un trajet parcouru par le véhicule et est conçu pour déterminer une grandeur comparative correspondant à ladite au moins une grandeur caractéristique à partir des données de mesure détectées au moyen du banc d'essai (3).

2. Dispositif de détermination et/ou de réglage d'une précision d'un appareil de contrôle (2) selon la revendication 1, **caractérisé en ce que** ledit au moins un système est réalisé sous la forme d'un générateur d'impulsions pour la détection d'impulsions de trajet.

3. Dispositif de détermination et/ou de réglage d'une précision d'un appareil de contrôle (2) selon la revendication 2, **caractérisé en ce que** l'unité de détection (10) comprend une unité de comptage pour la détermination, en tant qu'au moins une première grandeur caractéristique, d'un nombre d'impulsions de trajet pendant un processus de test.

4. Dispositif de détermination et/ou de réglage d'une précision d'un appareil de contrôle (2) selon l'une des revendications 1 à 3, **caractérisé en ce que** l'unité de détection (10) est conçue pour déterminer un signal de synchronisation, en particulier une durée d'un processus de test, en tant qu'au moins une seconde grandeur caractéristique.

5. Dispositif de détermination et/ou de réglage d'une précision d'un appareil de contrôle (2) selon l'une des revendications 1 à 4, **caractérisé en ce que** le banc d'essai (3) destiné à la mesure d'un trajet parcouru par le véhicule est un banc d'essai à rouleaux.

6. Dispositif de détermination et/ou de réglage d'une précision d'un appareil de contrôle (2) selon l'une des revendications 1 à 5, **caractérisé en ce que** le dispositif de mesure (11) comprend un appareil de mesure (12) et un ordinateur de mesure (14) matériellement séparé de ce dernier.

7. Dispositif de détermination et/ou de réglage d'une précision d'un appareil de contrôle (2) selon l'une des revendications 1 à 6, **caractérisé en ce que** le dispositif de mesure (11) comporte une interface avec un ordinateur central (4), dans lequel des données et/ou des instructions destinées à l'exécution d'un processus de test sont transmises de l'ordinateur central (4) au dispositif de mesure et/ou un programme destiné à l'exécution d'un processus de test peut être mis en œuvre au moins partiellement sur l'ordinateur central (4).

8. Dispositif de détermination et/ou de réglage d'une précision d'un appareil de contrôle (2) selon la revendication 7, **caractérisé en ce que** le programme destiné à l'exécution d'un processus de test est disponible sous forme d'application web sur le dispositif de mesure (11).

9. Dispositif de détermination et/ou de réglage d'une précision d'un appareil de contrôle (2) selon l'une des revendications 1 à 8, **caractérisé en ce que** le dispositif de mesure (11) peut être relié à un ordinateur de maintenance pour une transmission de données.

10. Produit de programme informatique destiné à être exécuté sur un dispositif de mesure (11) en tant que partie d'un dispositif selon l'une des revendications 1 à 9 pour la détermination et/ou le réglage d'une précision dans un appareil de contrôle (2) installé dans un véhicule, en particulier dans un tachygraphe numérique, dans lequel un système disposé dans le véhicule pour la détection du trajet parcouru par le véhicule est connecté à l'appareil de contrôle (2), et dans lequel il est prévu une unité de détection mobile (10) qui peut être reliée à l'appareil de contrôle (2) et peut être disposée dans le véhicule, qui comporte une unité de réception et d'émission pour la communication avec le dispositif de mesure (11) et une interface avec l'appareil de contrôle (2), au moyen de laquelle des données détectées par le système peuvent être lues à partir de l'appareil de contrôle (2),
le produit de programme informatique comprenant des instructions qui, lorsque le produit de programme informatique est exécuté sur le dispositif de mesure (11), provoquent l'exécution par ce dernier de la transmission d'instructions et/ou de données à l'unité de détection (10) par l'intermédiaire d'un protocole de communication pour lancer et/ou interrompre un processus de test et de la réception en provenance de l'unité de détection (10) d'une grandeur caractéristique déterminée, de la détection de données de mesure d'un banc d'essai (3) pour la mesure d'un trajet parcouru par le véhicule et de la détermination à partir des données de mesure détectées au moyen du banc d'essai (3) d'une grandeur comparative correspondant à ladite au moins une grandeur caractéristique.

11. Produit de programme informatique selon la revendication 10, destiné à être exécuté avec un programme fonctionnant en réseau sur le dispositif de mesure (11).

12. Procédé de détermination et/ou de réglage d'une précision d'un appareil de contrôle (2) installé dans un véhicule, en particulier d'un tachygraphe numérique, dans lequel au moins un système disposé dans le véhicule pour la détection du trajet parcouru par le véhicule est connecté à l'appareil de contrôle (2) au moyen d'une unité de détection mobile (10) qui peut être reliée à l'appareil de contrôle (2) et peut être disposée dans le véhicule et d'un dispositif de mesure (11) qui peut être disposé en-dehors du véhicule, dans lequel l'unité de détection (10) comporte une unité de réception et d'émission pour la communication bidirectionnelle sans fil avec le dispositif de mesure (11) et une interface avec l'appareil de contrôle (2), et dans lequel des données détectées par le système au moyen de l'interface sont lues à partir de l'appareil de contrôle (2),
dans lequel le dispositif de mesure (11) et l'unité de détection (10) échangent des instructions et des données par l'intermédiaire d'un protocole de communication, dans lequel l'unité de détection (10) détermine au moins une grandeur caractéristique à partir des données détectées pendant un processus de test et ladite au moins une grandeur caractéristique déterminée est transmise au dispositif de mesure (11), et le dispositif de mesure (11) détecte des données de mesure provenant d'un banc d'essai (3) pour la mesure d'un trajet parcouru par le véhicule et détermine une grandeur comparative correspondant à ladite au moins une grandeur caractéristique à partir des données de mesure détectées au moyen du banc d'essai (3).
